(19) Europäisches Patentamt
European Patent Office
Office européen des brevets

(11) Veröffentlichungsnummer : **0 236 262 B1**

(12) # EUROPÄISCHE PATENTSCHRIFT

(45) Veröffentlichungstag der Patentschrift : **06.03.91 Patentblatt 91/10**

(51) Int. Cl.$^5$ : **C09B 1/20**, C09B 1/40, C09B 1/42, C09B 1/50, C09B 1/54, D06P 3/60

(21) Anmeldenummer : **87810039.5**

(22) Anmeldetag : **23.01.87**

(54) **Anthrachinon-Küpenfarbstoffe.**

(30) Priorität : **29.01.86 CH 328/86**

(43) Veröffentlichungstag der Anmeldung : **09.09.87 Patentblatt 87/37**

(45) Bekanntmachung des Hinweises auf die Patenterteilung : **06.03.91 Patentblatt 91/10**

(84) Benannte Vertragsstaaten : **CH DE FR GB IT LI**

(56) Entgegenhaltungen :
**EP-A- 0 079 862**
**CH-A- 381 696**
**US-A- 2 967 867**

(73) Patentinhaber : **CIBA-GEIGY AG**
**Klybeckstrasse 141**
**CH-4002 Basel (CH)**

(72) Erfinder : **Adam, Jean-Marie Dr.**
**Rue de Village Neuf 60**
**F-68300 Roseneau (FR)**

EP 0 236 262 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft neue Anthrachinon-Küpenfarbstoffe, Verfahren zu deren Herstellung sowie deren Verwendung zum Färben und Bedrucken von Textilmaterialien, insbesondere von solchen aus cellulosischen Faser-materialien.

Aus der US-A-2 967 867 sind als Küpenfarbstoffe Bis-aminoanthrachinonyl-ditriazole bekannt.

Gegenstand der Erfindung sind tetrazolhaltige Küpenfarbstoffe der Formel

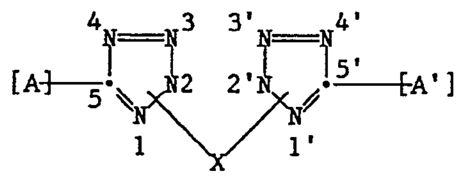
(I),

worin [A] und [A'] unabhängig voneinander einen Anthrachinonrest der Formel

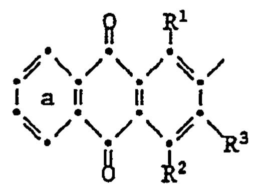
(II),

bedeuten,

$R^1$ und $R^2$, unabhängig voneinander, für $-NHR^4$ oder $-OR^5$ stehen,

$R^3$ Wasserstoff, -CN, -Halogen, $-CONR^5R^6$, $-SO_2NR^5R^6$ oder $-COOR^7$ bedeutet,

$R^4$ Wasserstoff, gegebenenfalls einfach oder mehrfach durch Hydroxy, $C_1$-$C_4$-Alkoxy oder Hydroxy-$C_1$-$C_4$-alkoxy substituiertes $C_1$-$C_6$-Alkyl, gegebenenfalls durch $C_1$-$C_3$-Alkyl substituiertes $C_5$-$C_8$-Cycloalkyl, gegebenenfalls einfach oder mehrfach durch Halogen, Nitro, $C_1$-$C_4$-Alkyl, $C_1$-$C_4$-Alkoxy oder $-NHCOR_8$ substituiertes Aryl, oder $-COR^8$ ist,

$R^5$ und $R^6$, unabhängig voneinander, Wasserstoff, $C_1$-$C_6$-Alkyl oder gegebenenfalls einfach oder mehrfach durch $C_1$-$C_4$-Alkyl, $C_1$-$C_4$-Alkoxy oder Halogen substituiertes Phenyl bedeuten,

$R^7$ für gegebenenfalls durch Hydroxy, $C_1$-$C_4$-Alkoxy, Hydroxyalkoxy oder Phenoxy substituiertes $C_1$-$C_6$-Alkyl oder $C_5$-$C_8$-Cycloalkyl steht,

$R^8$ $C_1$-$C_6$-Alkyl oder gegebenenfalls durch Halogen, Nitro, $C_1$-$C_4$-Alkyl, oder $C_1$-$C_4$-Alkoxy substituiertes Phenyl ist,

X für ein organisches Brückenglied steht

und wobei der Benzorest (a) gegebenenfalls durch Halogen, Hydroxy, Nitro, $C_1$-$C_4$-Alkoxy, Phenoxy, gegebenenfalls durch Halogen oder $C_1$-$C_4$-Alkyl substituiertes Phenoxy, Amino, N-Mono-$C_1$-$C_4$-alkylamino, N,N-Di-$C_1$-$C_4$-alkylamino oder Phenylamino, $C_1$-$C_4$-Alkylphenylamino, $C_1$-$C_4$-Alkoxyphenylamino oder Halogenphenylamino substituiert ist.

Hat $R^1$ und/oder $R^2$ die Bedeutung $-NHR^4$, so handelt es sich bei $R^4$ vorzugsweise um einen gegebenenfalls substituierten $C_1$-$C_6$-Alkylrest.

Unter einem gegebenenfalls substituierten $C_1$-$C_6$-Alkylrest ist generell ein Methyl-, Ethyl-, n- oder iso-Propyl-, n-, sec.- oder tert.-Butyl-oder ein geradkettiger oder verzweigter Pentyl- oder Hexylrest zu verstehen, der einfach oder mehrfach durch -OH, $C_1$-$C_4$-Alkoxy oder $C_1$-$C_4$-Alkoxy, substituiert durch -OH, substituiert sein kann.

Beispiele für geeignete substituierte $C_1$-$C_6$-Alkylreste sind : Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl und 2-Hydroxyethoxypentyl.

Bedeutet $R^4$ einen Cycloalkylrest, handelt es sich bevorzugt um einen Cyclopentyl- oder Cyclohexylrest ; als Substituenten für den Cycloalkylrest kommen vor allem Methylgruppen, in Frage.

Hat $R^4$ die Bedeutung Aryl, so handelt es sich z.B. um Naphthyl und insbesondere um Phenyl, welches jeweils unsubstituiert oder einfach oder mehrfach mit gleichen oder verschiedenen Resten substituiert sein kann. Als derartige Reste kommen in Frage : $C_1$-$C_4$-Alkyl, worunter generell Methyl, Ethyl, n- oder iso-Propyl oder n-, sec.- oder tert.-Butyl zu verstehen ist, $C_1$-$C_4$-Alkoxy, welches generell Methoxy, Ethoxy, n- oder iso-Propoxy oder n-, sec.- oder tert.-Butoxy umfasst, Halogen wie Fluor, Chlor oder Brom, Nitro oder die

Gruppe $-NHCOR^8$, wobei $R^8$ die zuvor angegebene Bedeutung hat.

Bedeutet $R^4$ substituiertes Aryl, handelt es sich bevorzugt um Phenyl mit 1 bis 3 $C_1$-$C_4$-Alkyl-, Chlor- oder Methoxysubstituenten.

Steht $R^4$ für die Gruppe $-COR^8$, so ist $R^8$ bevorzugt ein $C_1$-$C_6$-Alkylrest, oder ein unsubstituierter oder einfach oder mehrfach mit $C_1$-$C_4$-Alkyl, $C_1$-$C_4$-Alkoxy, Halogen oder Nitro substituierter Phenylrest. Stellt $R^4$ die Gruppe $-COR^8$ dar, so hat $R^8$ bevorzugt die Bedeutung Methyl oder Phenyl.

$R^4$ steht bevorzugt für Wasserstoff, unsubstituiertes oder mit 1 bis 3 $C_1$-$C_4$-Alkyl-, Chlor- oder Methoxyresten substituiertes Phenyl oder $C_5$-$C_8$-Cycloalkyl.

Ist $R^1$ und/oder $R^2$ ein Rest $-OR^5$, so kommen die folgenden Bedeutungen für $R^5$ in Frage : Wasserstoff, $C_1$-$C_6$-Alkyl, unsubstituiertes oder einfach oder mehrfach mit gleichen oder verschiedenen Resten substituiertes Phenyl. Als substituiertes Phenyl kann $R^5$ 1 bis 3 $C_1$-$C_4$-Alkyl-, $C_1$-$C_4$-Alkoxy-oder Halogenreste tragen. Bei $R^5$ inder Bedeutung Phenyl handelt es sich bevorzugt um unsubstituiertes oder mit 1 bis 3 $C_1$-$C_4$-Alkylresten substituiertes Phenyl. $R^5$ steht besonders bevorzugt für Wasserstoff, $C_1$-$C_4$-Alkyl und Phenyl.

Die Reste $R^1$ und $R^2$ können jeweils gleich oder verschieden sein. $R^1$ und $R^2$ stehen unabhängig voneinander bevorzugt für $-NHR^4$.

In einer besonders bevorzugten Ausführungsform der erfindungsgemässen Küpenfarbstoffe bedeuten $R^1$ und $R^2$ unabhängig voneinander $-NHR^4$, wobei $R^4$ für Wasserstoff, $C_1$-$C_4$-Alkyl, $C_5$-$C_6$-Cycloalkyl oder gegebenenfalls einfach oder mehrfach mit $C_1$-$C_4$-Alkyl, $C_1$-$C_4$-Alkoxy oder Halogen substituiertes Phenyl steht.

Handelt es sich bei $R^3$ um die Gruppe $-CONR^5R^6$ oder $-SO_2NR^5R^6$, so gelten füt $R^5$ und $R^6$ unabhängig voneinander die zuvot für $R^5$ genannten Bedeutungen und Bevorzugungen.

Hat $R^3$ die Bedeutung $-COOR^7$, so kann es sich bei $R^7$ um einen geradkettigen oder verzweigten $C_1$-$C_6$-Alkylrest, der gegebenenfalls z.B. durch $-OH$, Phenoxy, $C_1$-$C_4$-Alkoxy oder Hydroxyalkoxy substituiert ist, oder um einen $C_5$-$C_8$-Cycloalkylrest und hierbei insbesondere um einen Cyclopentyl- oder Cyclohexylrest handeln.

Bevorzugt stellt der Rest $R^3$ Wasserstoff, $-CN$ oder $-CONR^5R^6$ dar, wobei $R^5$ und $R^6$ unabhängig voneinander die zuvor angegebene Bedeutung haben ; insbesondere bevorzugt sind für $R^3$ die Bedeutungen Wasserstoff und $-CN$.

Bei dem Brückenglied X kann es sich z.B. um einen Alkylen-, Alkenylen-, Alkyliden-, Cycloalkylen- oder Cycloalkylidenrest oder einen Rest der Formel $-CH_2-X'-CH_2-$ handeln, wobei X' ein bivalenter Rest eines gegebenenfalls substituierten aromatischen Kohlenwasserstoffs oder Heteroaromaten ist.

X kann als Alkylen beispielsweise Methylen, 1,2-Ethylen, 1,3-Propylen, 1,4-butylen, 1-Methyl-1,4-butylen, 2-Methyl-1,4-butylen, 1,5-Pentylen oder 1,6-Hexylen darstellen. Vorzugsweise ist X als Alkylen geradkettiges $C_2$-$C_4$-Alkylen.

Bei X in der Bedeutung Alkenylen kann es sich z.B. um einen Butenylenrest handeln.

Bei X in der Bedeutung Alkyliden handelt es sich bevorzugt um $C_2$-$C_6$-Alkyliden ; Beispiele sind 1,1-Ethyliden, 1,1-Propyliden, 1,1-Butyliden, 1,1-Pentyliden oder 1,1-Hexyliden.

Handelt es sich bei X um Cycloalkylen oder Cycloalkyliden, so kann X z.B. für 1,2-, 1,3- oder 1,4-Cyclohexylen, 1,2- oder 1,3-Cyclopentylen, 1,1-Cyclohexyliden oder 1,1-Cyclopentyliden stehen.

Bedeutet X einen Rest der Formel $-CH_2-X'-CH_2-$, so bedeutet X' z.B. einen bivalenten Rest eines gegebenenfalls substituierten $C_6$-$C_{18}$-Aromaten oder $C_4$-$C_{14}$-Heteroaromaten.

Steht X' für einen bivalenten $C_6$-$C_{18}$-Aromat, so kann dies ein einkerniger oder mehrkernig kondensierter oder mehrkernig unkondensierter Aromat sein. Beispiele sind z.B. ein bivalenter Benzol-, Naphthalin-, Anthracen-, Biphenyl- oder Terphenylrest.

Als Verknüpfungspunkte für die beiden Methylengruppen am aromatischen Kohlenwasserstoff X' kommen praktisch alle Positionen in Frage, wobei diejenigen Positionen bevorzugt sind, die zu gestreckten Farbstoffmolekülen der Formel I führen. Dementsprechend ist X' z.B. als bivalenter Benzolrest bevorzugt 1,4-Phenylen, als bivalenter Biphenylrest bevorzugt 4,4'-Biphenylen und als bivalenter Terphenylrest bevorzugt 4,4"-Terphenylen.

Der bivalente Rest des aromatischen $C_6$-$C_{18}$-Kohlenwasserstoffs kann einfach oder mehrfach mit gleichen oder verschiedenen Resten wie z.B. mit $C_1$-$C_4$-Alkyl-, $C_1$-$C_4$-Alkoxy- oder Halogenresten substituiert sein ; vorzugsweise ist X' als bivalenter Rest eines $C_6$-$C_{18}$-Aromaten nicht substituiert.

Bei X' in der Bedeutung $C_4$-$C_{14}$-Heteroaromat kann es sich z.B. um einen bivalenten Pyrrol-, Furan-, Oxazol-, Thiophen-, Imidazol-, Pyridin-, Chinolin-, Benzimidazol-, Carbazol- oder Xanthenrest handeln.

Bevorzugt enthält der bivalente heteroaromatische Rest 1 bis 3 und insbesondere 1 bis 2 Heteroatome wie O, S und N und stellt besonders bevorzugt einen 5- oder 6-gliedrigen Ring dar.

Der bivalente heteroaromatische Rest kann einfach oder mehrfach mit gleichen oder verschiedenen

Resten wie z.B. mit $C_1$-$C_4$-Alkyl-, $C_1$-$C_4$-Alkoxy- oder Halogenresten substituiert sein ; vorzugsweise ist X′ als bivalenter Rest eines $C_4$-$C_{14}$-Hetetoatomaten nicht substituiert.

In den bevorzugten Küpenfarbstoffen det Fotmel I steht X für die Gruppe $-CH_2-X'-CH_2-$ ; hierbei ist es besonders bevorzugt, dass X′ ein bivalenter Rest eines gegebenenfalls substituierten $C_6$-$C_{18}$-Aromaten ist.

Insbesondere bevorzugt sind Küpenfarbstoffe der Formel I, wo X $-CH_2-X'-CH_2-$ bedeutet und X′ ein gegebenenfalls substituierter Phenylen-, Biphenylen- oder Naphthylenrest ist.

In einer besonders bevorzugten Ausführungsform der erfindungsgemässen Küpenfarbstoffe steht X für die Gruppe $-CH_2-X'-CH_2-$ und X′ bedeutet 1,4-Phenylen oder 4,4′-Biphenylen.

Der Benzorest (a) kann ein- oder mehrfach mit gleichen oder verschiedenen Resten substituiert sein, wobei als Substituenten z.B. Halogen wie Fluor, Chlor, Brom, –OH, $C_1$-$C_4$-Alkoxy, Phenoxy, gegebenenfalls z.B. durch $C_1$-$C_4$-Alkyl oder Halogen substituiert, $-NO_2$, $-NH_2$, N-mono- oder N,N-di-$C_1$-$C_4$-alkylamino oder NH-Phenyl, wobei das Phenyl gegebenenfalls durch $C_1$-$C_4$-Alkyl, $C_1$-$C_4$-Alkoxy oder Halogen substituiert ist, in Frage kommen.

In den bevorzugten Küpenfarbstoffen der Formel I ist der benzorest (a) nicht substituiert.

In den Formeln I, III und IV sowie in den Beispielen ist nur jeweils eine der verschiedenen denkbaren Grenzstrukturen für die Tetrazole widergegeben ; dem Fachmann sind weitere Grenzstrukturen bekannt. Diese sollen durch die Formeln mitumfasst sein.

Für die Bindung des organischen Brückenglieds X an die Tetrazole kommen in den Verbindungen der Formel I verschiedene Positionen am jeweiligen Tetrazol in Frage, namentlich die 1- oder 2-Stellung am einen und die 1′- oder 2′-Stellung am anderen Heterocyclus.

Bevorzugt sind hierbei solche Verbindungen der Formel I, wo X in 2-Stellung am einen und in 2′-Stellung am anderen Tetrazol-Heterocyclus gebunden ist.

Darüberhinaus umfasst die Erfindung auch Gemische aller denkbaren isomeren Verbindungen der Formel I, die sich in der Anknüpfungs-position von X an einer oder beiden Tetrazolgruppen unterscheiden können.

Eine bevorzugte Ausführungsform der Erfindung betrifft Küpenfarbstoffe der Formel I, worin $R^1$ und $R^2$ unabhängig voneinander für $-NHR^4$ oder $-OR^5$ stehen und $R^4$ und $R^5$ die im Anspruch 1 angegebene Bedeutung haben, $R^3$ Wasserstoff oder –CN ist, X ein Rest der Formel $-CH_2-X'-CH_2-$ ist und X′ einen bivalenten gegebenenfalls substituierten $C_6$-$C_{18}$-Aromat oder einen bivalenten $C_4$-$C_{14}$-Heteroaromat bedeutet und der Benzorest (a) nicht substituiert ist.

In einer besonders bevorzugten Ausführungsform der Küpenfarbstoffe gemäss Formel I sind die Reste [A] und [A′] identisch.

Insbesondere bevorzugt sind Küpenfarbstoffe der Formel I, worin [A] und [A′] identisch sind, $R^1$ und $R^2$ unabhängig voneinander die Gruppe $-NHR^4$ bedeuten, $R^3$ für Wasserstoff oder –CN steht, $R^4$ Wasserstoff, $C_1$-$C_4$-Alkyl, $C_5$-$C_6$-Cycloalkyl oder gegebenenfalls einfach oder mehrfach mit $C_1$-$C_4$-Alkyl, $C_1$-$C_4$-Alkoxy oder Halogen substituiertes phenyl ist, X ein Brückenglied der Formel $-CH_2-X'-CH_2-$ darstellt, X′ für einen bivalenten $C_6$-$C_{18}$-Aromaten, insbesondere für 1,4-Phenylen oder 4,4′-Biphenylen, steht und der Benzorest (a) nicht substituiert ist.

Die Küpenfarbstoffe der Formel I können nach an sich bekannten Methoden erhalten werden, indem man z. B. Tetrazolverbindungen der Formeln

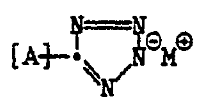

(III)

und

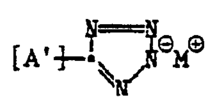

(IV),

worin [A] und [A′] die im Anspruch 1 angegebene Bedeutung haben und verschieden oder identisch sein können und $M^{\oplus}$ für $Li^{\oplus}$, $Na^{\oplus}$, $K^{\oplus}$ oder $NH_4^{\oplus}$ steht, mit einer Dihalogenverbindung der Formel

$$Hal^1\text{-}X\text{-}Hal^2, \qquad (V),$$

wobei X die im Anspruch 1 angegebene Bedeutung hat und $Hal^1$ und $Hal^2$ unabhängig voneinander Halogen wie Chlor, Brom oder Jod bedeuten, umsetzt.

Hierbei können die Verbindungen der Formeln III und IV gleichzeitig oder in beliebiger Reihenfolge nacheinander mit der Dihalogenverbindung umgesetzt werden.

Handelt es sich bei [A] und [A'] um unterschiedliche Anthrachinonreste, werden die Verbindungen der Formeln III und IV vorzugsweise nacheinander mit der Dihalogenverbindung umgesetzt.

Sind [A] und [A'] identisch, geht man vorzugsweise so vor, dass man 2 Mol-Aequivalente der Verbindung der Formel

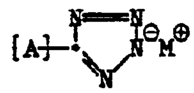

(III)

mit 1 Mol-Aequivalent der Dihalogenverbindung der Formel

$$Hal^1\text{-}X\text{-}Hal^2 \qquad (V),$$

wobei [A], X, $M^\oplus$, $Hal^1$ und $Hal^2$ die zuvor angegebene Bedeutung haben, umsetzt.

Die Halogenreste $Hal^1$ und $Hal^2$ können jeweils gleich oder verschieden sein und bedeuten unabhängig voneinander bevorzugt Chlor oder Brom und insbesondere bevorzugt Chlor.

Handelt es sich bei [A] und [A'] um identische Anthrachinonderivate, so sind $Hal^1$ und $Hal^2$ vorzugsweise identisch.

Die Anthrachinonderivate det Formeln III und IV sind bekannt oder können nach bekannten Methoden darsgestellt werden, z.B. in der aus der EP 79 862 bekannten Weise.

Die Umsetzung der Anthrachinonderivate der Formeln III und IV mit der Dihalogenverbindung wird vorzugsweise in Gegenwart eines Lösungsmittels, insbesondere eines polaren aprotischen Lösungsmittels, durchgeführt, wobei beispielsweise in Betracht kommen : stickstoffhaltige Verbindungen, wie Formamid, Dimethylformamid, Dimethylacetamid, N,N,N',N'-Tetramethylharnstoff, N-Methylpyrrolidon, 1,5-Dimethylpyrrolidon und Pyridin ; schwefelhaltige Verbindungen, wie Sulfolan (Tetramethylensulfon) und Sulfolen (2,3-und 2,5-Dihydrothiophen-S-dioxid) und deren in α-und/oder β-Stellung insbesondere durch Alkyl- oder Hydroxyalkylgruppen substituierte Derivate und Dimethylsulfoxid ; sowie phosphorhaltige Verbindungen, wie Hexamethylphosphorsäuretriamid und Bis-(dimethylamido)-methanphosphat.

Das bevorzugte Lösungsmittel ist Dimethylformamid.

Die bei der Reaktion angewendete Temperatur liegt im allgemeinen zwischen 70 und 150°C und bevorzugt zwischen 100 und 150°C.

Die Verbindungen der Formel I werden in an sich bekannter Weise, z.B. durch Absaugen und/oder Waschen mit Wasser oder anderen geeigneten Lösungsmitteln isoliert und gereinigt.

Küpenfarbstoffe der Formel I, worin [A] und [A'] identisch sind, können vorzugsweise nach einem Eintopfverfahren erhalten werden, indem man zunächst ein Anthrachinon-Derivat dert Formel

$$[A]\text{—}CN, \qquad (VI)$$

mit einem Azid in einem polaren aprotischen Lösungsmittel gegebenenfalls in Gegenwart eines Ammoniumsalzes zur Tetrazolverbindung der Formel

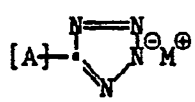

(III)

umsetzt und diese Tetrazolverbindung anschliessend ohne Zwischenisolierung mit einer Verbindung der Formel

$$Hal^1\text{-}X\text{-}Hal^2 \qquad (V)$$

reagieren lässt, wobei $Hal^1$ und $Hal^2$ unabhängig voneinander Halogen wie Chlor, Brom oder Jod bedeuten und [A], $M^{\oplus}$ und X jeweils die zuvor angegebene Bedeutung haben.

Die Verbindungen der Formel VI sind bekannt, oder können nach bekannten Methoden hergestellt werden, z.B. in der aus der EP-A 79 862 bekannten Weise.

Als Azide finden z.B. Ammoniumazid oder vorzugsweise Alkaliazide wie Kaliumazid und insbesondere Natriumazid Verwendung.

Als polare aprotische Lösungsmittel kommen z.B. die zuvor genannten Lösungsmittel in Betracht, wobei Dimethylformamid bevorzugt ist.

Bei dem Ammoniumsalz kann es sich z.B. um Ammoniumsulfat, Ammoniumcarbonat, Ammoniumbicarbonat und insbesondere um Ammoniumchlorid handeln. Vorzugsweise führt man die Reaktion ohne Ammoniumsalz durch.

Der erste Reaktionsschritt wird im allgemeinen bei einer Temperatur zwischen 70 und 150°C und vorzugsweise zwischen 100 und 150°C ausgeführt und ergibt die Tetrazolverbindung der Formel III, die ohne Zwischenisolierung in der zuvor beschriebenen Weise mit der Dihalogenverbindung der Formel $Hal^1$-X-$Hal^2$, wobei $Hal^1$ und $Hal^2$ vorzugsweise identisch sind, umgesetzt wird.

Die neuen erfindungsgemässen Küpenfarbstoffe eignen sich zum Färben und Bedrucken von verschiedensten Materialien und insbesondere von Fasern aus natürlicher oder regenerierter Cellulose in Gegenwart von Reduktionsmitteln, wie z.B. Dithionit.

Die Farbstoffe zeichnen sich durch ein sehr gutes Aufbauvermögen aus. Die erhaltenen Färbungen zeichnen sich durch gute Egalität und einen klaren Farbton aus. Die Echtheiten sind allgemein sehr gut, insbesondere die Licht-, Wasser-, Chlor- und Sodakochechtheiten.

Die neuen Farbstoffe reservieren Polyesterfasern gut oder schmutzen sie Ton-in-Ton an. Sie sind deshalb im Gemisch mit Dispersionsfarbstoffen zum Färben von Mischfasern aus Cellulose- und Polyestermaterial geeignet.

Ein weiterer Gegenstand der Erfindung ist die Verwendung von Küpenfarbstoffen der Formel I zum Färben und Bedrucken von Textil-materialien, insbesondere von solchen aus Cellulosematerial.

Die Farbstoffe können auch als Pigmente für die verschiedensten Pigmentapplikationen eingesetzt werden, z.B. in feinverteilter Form zum Färben von Kunstseide und Viscose oder Celluloseethern oder -estern oder von Superpolyamiden bzw. Superpolyurethanen oder Polyestern in der Spinnmasse, sowie zur Herstellung von gefärbten Lacken oder Lackbildnern, Lösungen oder Produkten aus Acetylcellulose, Nitrocellulose, natürlichen Harzen oder Kunstharzen, wie Polymerisationsharzen oder Kondensationsharzen, z.B. Aminoplasten, Alkydharzen, Phenoplasten, Polyolefinen, wie Polystyrol, Polyvinylchlorid, Polyethylen, Polypropylen, Polyacrylnitril, Gummi, Casein, Silikon und Silikonharzen. Ausserdem lassen sie sich vorteilhaft bei der Herstellung von Farbstiften, kosmetischen Präparaten oder Laminierplatten verwenden.

In den nachfolgenden Beispielen bedeuten Teile Gewichtsteile und Prozente Gewichtsprozente. Die Temperaturen sind in Grad Celsius angegeben.

Beispiel 1 : 29 Teile 1,4-Diamino-2,3-dicyananthrachinon und 7,2 Teile Natriumazid werden in 300 Teilen Dimethylformamid 5 Stunden bei einer Tempetatur von 140°C gerührt. Nach dem Zusatz von 9 Teilen 1,4-Dichlormethylbenzol wird das Reaktionsgemisch noch 15 Stunden bei 120°C weitergerührt. Das ausgefallene Reaktionsprodukt der Formel

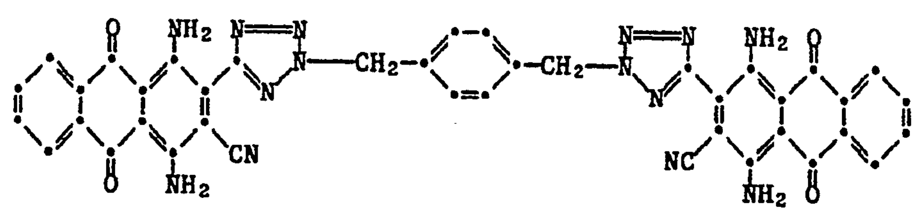

wird abgesaugt, mit Wasser gewaschen und getrocknet.
Der Farbstoff eignet sich zum Färben von Cellulosematerial, wobei Blaufärbungen mit guten Echtheiten und hohen Farbausbeuten erhalten werden.

Beispiele 2-14 : Arbeitet man wie im Beispiel 1 beachrieben und verwendet statt 1,4-Diamino-2,3-dicyananthrachinon die in der Tabelle 1 unter A angeführten Anthrachinon-Derivate und anstelle von 1,4-Dichlormethylbenzol die in Tabelle 1 unter B aufgeführten Dihalogenverbindungen, erhält man Farbstoffe, welche Cellulose in blauen bis blaugrünen Tönen mit guten Echtheiten färben.

Tabelle 1

| Nr. | A | B |
|---|---|---|
| 2 | 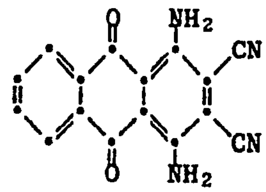 | 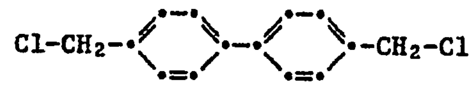 |
| 3 | 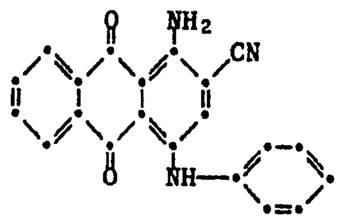 | 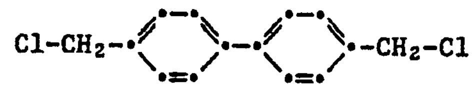 |
| 4 | 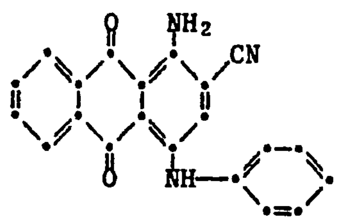 | 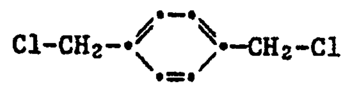 |
| 5 | 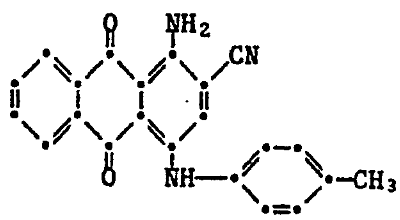 | 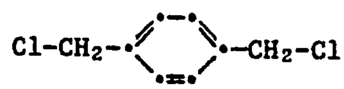 |
| 6 | 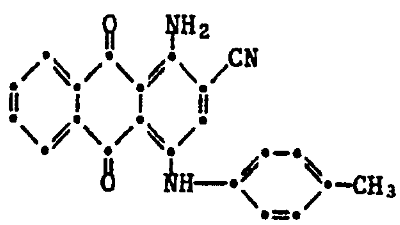 | 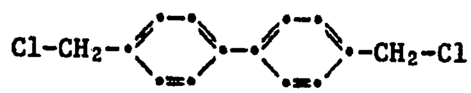 |
| 7 | 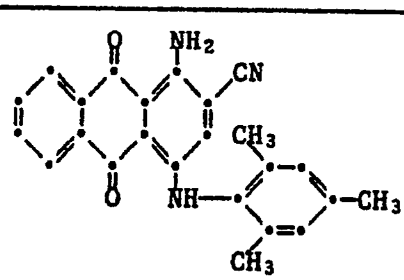 | 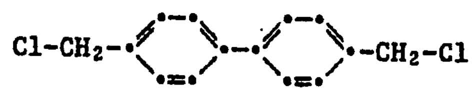 |

Tabelle 1 (Fortsetzung)

| Nr. | A | B |
|---|---|---|
| 8 | 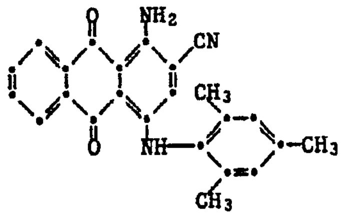 | 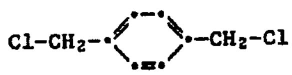 |
| 9 | 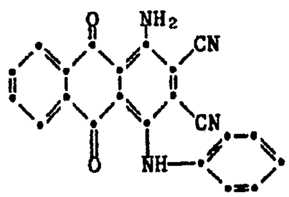 | 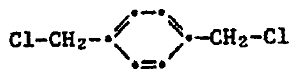 |
| 10 | 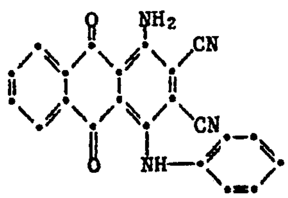 | 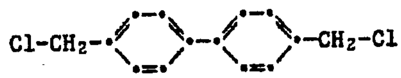 |
| 11 | 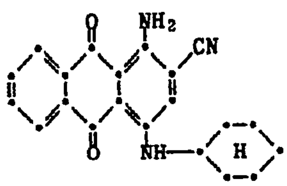 | 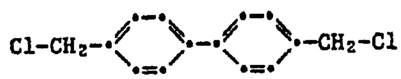 |
| 12 | 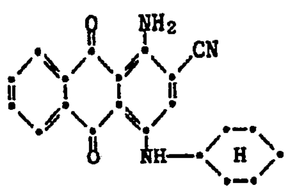 | 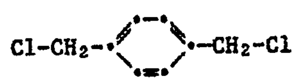 |
| 13 | 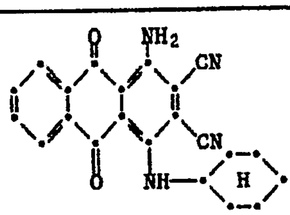 | 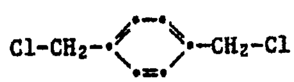 |

Tabelle 1 (Fortsetzung)

| Nr. | A | B |
|---|---|---|
| 14 | 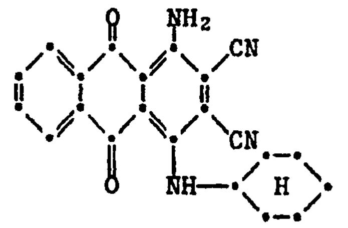 | 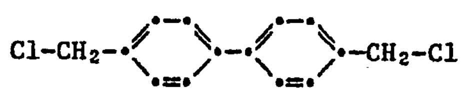 |

Beispiel 15 : 1 Teil des gemäss Beispiel 1 erhaltenen Farbstoffes wird mit 10 Vol.-Teilen 30%iger wässriger Natriumhydroxidlösung und 5 Teilen Natriumhydrosulfit in 200 Teilen Wasser bei 50 bis 70°C verrührt. Einem Färbebad, das in 2000 Teilen Wasser 5 Vol.-Teile 30%ige wässrige Natriumhydroxidlösung und 3,7 Teile Natriumhydrosulfit enthält, gibt man die obige Stammküpe zu und geht bei 40°C mit 100 Teilen Baumwolle ein. Nach 10 Minuten gibt man 15 Teile Natriumchlorid zu, nach 20 Minuten weitere 15 Teile und färbt bei 40°C während 45 Minuten. Hierauf wird die Baumwolle abgequetscht, oxidiert und wie üblich fertiggestellt. Man erhält in einem klaren Blau mit guten Echtheiten gefärbte Baumwolle.

Beispiel 16 : 5 Teile des gemäss Beispiel 1 erhaltenen Farbstoffes werden mit 95 Teilen Dioctylphthalat vermischt und in einer Kugelmühle so lange vermahlen, bis die Farbstoffteilchen kleiner als 3 µ sind.

0,8 Teile dieser Dioctylphthalatpaste werden mit 13 Teilen Polyvinylchlorid, 7 Teilen Dioctylphthalat und 0,1 Teilen Cadmiumstearat vermischt und hierauf 5 Minuten auf dem Zweiwalzenstuhl bei 140°C ausgewalzt. Man erhält ein blau gefärbtes Material mit guten Migrationseigenschaften und guter Lichtechtheit.

Beispiel 17 : 10 g Titandioxid und 2 g des gemäss Beispiel 10 erhaltenen Farbstoffes werden mit einer Mischung von 26,4 g Kokosalkydharz, 24,0 g Melamin-Formaldehydharz (50% Festkörpergehalt), 8,8 g Ethylenglykolmonomethylether und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120°C eingebrannt, dann erhält man eine grünblaue Lackierung, die sich bei gutert Farbstärke durch eine gute Ueberlackierechtheit, eine hervorragende Lichtechtheit und gute Wetterechtheit auszeichnet.

## Ansprüche

1. Küpenfarbstoffe der Formel

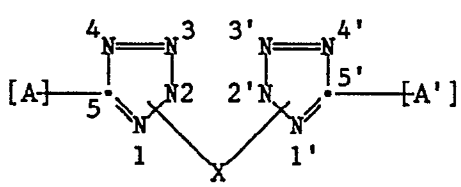

(I),

worin [A] und [A'], unabhängig voneinander, einen Anthrachinonrest der Formel

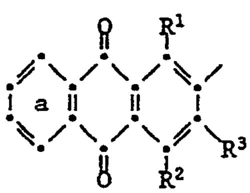

(II)

bedeuten,
$R^1$ und $R^2$, unabhängig voneinander, für $-NHR^4$ oder $-OR^5$ stehen,

$R^3$ Wasserstoff, –CN, –Halogen, –$CONR^5R^6$, –$SO_2NR^5R^6$ oder -$COOR^7$ bedeutet,

$R^4$ Wasserstoff, gegebenenfalls einfach oder mehrfach durch Hydroxy, $C_1$-$C_4$-Alkoxy oder Hydroxy-$C_1$-$C_4$-alkoxy substituiertes $C_1$-$C_6$-Alkyl, gegebenenfalls durch $C_1$-$C_3$-Alkyl substituiertes $C_5$-$C_8$-Cycloalkyl, gegebenenfalls einfach oder mehrfach durch Halogen, Nitro, $C_1$-$C_4$-Alkyl, $C_1$-$C_4$-Alkoxy oder –$NHCOR_8$ substituiertes Aryl, oder –$COR^8$ ist,

$R^5$ und $R^6$, unabhängig voneinander, Wasserstoff, $C_1$-$C_6$-Alkyl oder gegebenenfalls einfach oder mehrfach durch $C_1$-$C_4$-Alkyl, $C_1$-$C_4$-Alkoxy oder Halogen substituiertes Phenyl bedeuten,

$R^7$ für gegebenenfalls durch Hydroxy, $C_1$-$C_4$-Alkoxy, Hydroxyalkoxy oder Phenoxy substituiertes $C_1$-$C_6$-Alkyl oder $C_5$-$C_8$-Cycloalkyl steht,

$R^8$ $C_1$-$C_6$-Alkyl oder gegebenenfalls durch Halogen, Nitro, $C_1$-$C_4$-Alkyl, oder $C_1$-$C_4$-Alkoxy substituiertes Phenyl ist,

X für ein organisches Brückenglied steht

und wobei der Benzorest (a) gegebenenfalls durch Halogen, Hydroxy, Nitro, $C_1$-$C_4$-Alkoxy, Phenoxy, gegebenenfalls durch Halogen oder $C_1$-$C_4$-Alkyl substituiertes Phenoxy, Amino, N-Mono-$C_1$-$C_4$-alkylamino, N,N-Di-$C_1$-$C_4$-alkylamino oder Phenylamino, $C_1$-$C_4$-Alkylphenylamino, $C_1$-$C_4$-Alkoxyphenylamino oder Halogenphenylamino substituiert ist.

2. Küpenfarbstoffe gemäss Anspruch 1, dadurch gekennzeichnet, dass X ein Alkylen-, Alkenylen-, Alkyliden-, Cycloalkylen- oder Cycloalkylidenrest oder ein Rest der Formel –$CH_2$–X'–$CH_2$– ist und X' für einen bivalenten Rest eines gegebenenfalls substituierten aromatischen Kohlenwasserstoffs oder Heteroaromaten steht.

3. Küpenfarbstoffe gemäss einem der Ansprüche 1 oder 2, dadurch gekennzeichnet, dass X ein Rest der Formel –$CH_2$–X'–$CH_2$– ist und X' einen bivalenten Rest eines gegebenenfalls substituierten $C_6$-$C_{18}$-Aromaten oder $C_4$-$C_{14}$-Heteroaromaten darstellt.

4. Küpenfarbstoffe gemäss Anspruch 3, dadurch gekennzeichnet, dass X' für einen gegebenenfalls substituierten bivalenten Benzol-, Naphthalin-, Anthracen-, Biphenyl-, Terphenyl-, Pyrrol-, Furan-, Thiophen-, Oxazol-, Imidazol-, Pyridin-, Chinolin-, Benzimidazol-, Carbazol- oder Xanthentest steht.

5. Küpenfarbstoffe gemäss Anspruch 3, dadurch gekennzeichnet, dass X' ein gegebenenfalls substituierter bivalenter Rest eines $_6$-$C_{18}$- Aromaten ist.

6. Küpenfarbstoffe gemäss Anspruch 3, dadurch gekennzeichnet, dass X' für einen gegebenenfalls substituierten Phenylen-, Biphenylen-oder Naphthylenrest steht.

7. Küpenfarbstoffe gemäss einem der Ansprüche 2 bis 6, dadurch gekennzeichnet, dass X' unsubstituiert oder einfach oder mehrfach mit $C_1$-$C_4$-Alkyl, $C_1$-$C_4$-Alkoxy oder Halogen substituiert ist.

8. Küpenfarbstoffe gemäss einem der Ansprüche 2 bis 7, dadurch gekennzeichnet, dass X' ein unsubstituierter 1,4-Phenylen- oder 4,4'-Biphenylenrest ist.

9. Küpenfarbstoffe gemäss einem der Ansprüche 1 bis 8, dadurch gekennzeichnet, dass das Brückenglied X in 2-Stellung am einen und in 2'-Stellung am anderen Tetrazol-Heterocyclus gebunden ist.

10. Küpenfarbstoffe gemäss einem der Ansprüche 1 bis 9, dadurch gekennzeichnet, dass die Reste $R^1$ und $R^2$ unabhängig voneinander für –$NHR^4$ stehen und $R^4$ Wasserstoff, $C_1$-$C_4$-Alkyl, $C_5$-$C_6$-Cycloalkyl oder gegebenenfalls einfach oder mehrfach mit $C_1$-$C_4$-Alkyl, $C_1$-$C_4$-Alkoxy oder Halogen substituiertes Phenyl ist.

11. Küpenfarbstoffe gemäss einem der Ansprüche 1 bis 10, dadurch gekennzeichnet, dass $R^3$ Wasserstoff, –CN oder –$CONR^5R^6$ ist und $R^5$ und $R^6$ die im Anspruch 1 angegebene Bedeutung haben.

12. Küpenfarbstoffe gemäss einem der Ansprüche 1 bis 11, dadurch gekennzeichnet, dass $R^3$ Wasserstoff oder –CN ist.

13. Küpenfarbstoffe gemäss einem der Ansprüche 1 bis 12, dadurch gekennzeichnet, dass der Benzorest (a) unsubstituiert ist.

14. Küpenfarbstoffe gemäss einem der Ansprüche 1 bis 13, dadurch gekennzeichnet, dass [A] und [A'] identisch sind.

15. Küpenfarbstoffe gemäss Anspruch 1, dadurch gekennzeichnet, dass $R^1$ und $R^2$ unabhängig voneinander für –$NHR^4$ oder –$OR^5$ stehen und $R^4$ und $R^5$ die in Anspruch 1 angegebene Bedeutung haben, $R^3$ Wasserstoff oder –CN ist, X ein Rest der Formel –$CH_2$–X'–$CH_2$– ist und X' einen bivalenten Rest eines gegebenenfalls substituierten $C_6$-$C_{18}$-Aromaten oder $C_4$-$C_{14}$-Heteroaromaten bedeutet und der Benzorest (a) nicht substituiert ist.

16. Küpenfarbstoffe gemäss Anspruch 1, dadurch gekennzeichnet, dass [A] und [A'] identisch sind, $R^1$ und $R^2$ unabhängig voneinander die Gruppe –$NHR^4$ bedeuten, $R^3$ für Wasserstoff oder –CN steht, $R^4$ Wasserstoff, $C_1$-$C_4$-Alkyl, $C_5$-$C_6$-Cycloalkyl oder gegebenenfalls einfach oder mehrfach mit $C_1$-$C_4$-Alkyl, $C_1$-$C_4$-Alkoxy oder Halogen substituiertes Phenyl ist, X ein Brückenglied der Formel –$CH_2$–X'–$CH_2$– darstellt, X' für einen bivalenten Rest eines $C_6$-$C_{18}$-Aromaten steht und der Benzorest (a) nicht substituiert ist.

17. Küpenfarbstoffe gemäss Anspruch 16, dadurch gekennzeichnet, dass X' ein 1,4-Phenylen- oder 4,4'-Biphenylenrest ist.

18. Verfahren zur Herstellung von Küpenfarbstoffen der Formel I, dadurch gekennzeichnet, dass man Tetrazolverbindungen der Formeln

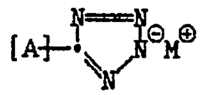

(III)

und

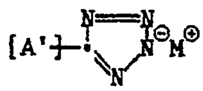

(IV),

worin [A] und [A'] die im Anspruch 1 angegebene Bedeutung haben und verchieden oder identisch sein können und $M^{\oplus}$ für $Li^{\oplus}$, $Na^{\oplus}$, $K^{\oplus}$ oder $NH_4^{\oplus}$ steht, mit einer Dihalogenverbindung der Formel

$$Hal^1-X-Hal^2 \qquad (V),$$

wobei X die im Anspruch 1 angegebene Bedeutung hat und $Hal^1$ und $Hal^2$ unabhängig voneinander Halogen wie Chlor, Brom oder Jod bedeuten, umsetzt.

19. Verfahren gemäss Anspruch 18, dadurch gekennzeichnet, dass man 2 Mol-Aequivalente der Verbindung der Formel

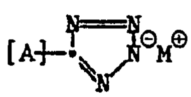

(III)

mit 1 Mol-Aequivalent der Dihalogenverbindung der Formel

$$Hal^1-X-Hal^2 \qquad (V),$$

wobei [A], X, $M^{\oplus}$, $Hal^1$ und $Hal^2$ die im Anspruch 18 angegebene Bedeutung haben, umsetzt.

20. Verfahren zur Herstellung von Küpenfarbstoffen der Formel I gemäss Anspruch 1, worin [A] und [A'] identisch sind, dadurch gekennzeichnet, dass man im Eintopfverfahren zunächst ein Anthrachinon-Derivat der Formel

[A]-CN (VI),

mit einem Azid in einem polaren aprotischen Lösungsmittel gegebenenfalls in Gegenwart eines Ammoniumsalzes zur Tetrazolverbindung der Formel

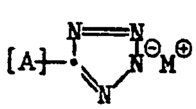

(III)

umsetzt und diese Tetrazolverbindung anschliessend ohne Zwischenisolierung mit einer Verbindung der

Formel

$$Hal^1\text{-}X\text{-}Hal^2 \qquad (V),$$

reagieren lässt, wobei $Hal^1$ und $Hal^2$ unabhängig voneinander Halogen wie Chlor, Brom oder Jod bedeuten und [A], $M^{\oplus}$ und X jeweils die im Anspruch 18 angegebene Bedeutung haben.

21. Verwendung von Küpenfarbstoffen der Formel I gemäss Anspruch 1 zum Färben und Bedrucken von Textilmaterialien, insbesondere von solchen aus Cellulosematerial.

**Claims**

1. A vat dye of the formula

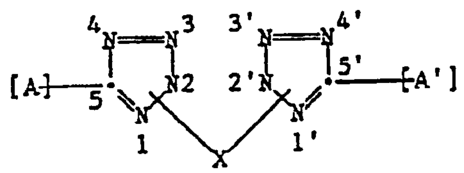

(I)

in which [A] and [A'] are each independently of the other an anthraquinone radical of the formula

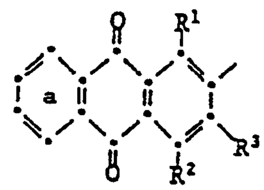

(II)

$R^1$ and $R^2$ are each independently of the other $-NHR^4$ or $-OR^5$,
$R^3$ is hydrogen, -CN, halogen, $-CONR^5R^6$, $-SO_2NR^5R^6$ or $-COOR^7$,
$R^4$ is hydrogen, $C_1$-$C_6$alkyl which is unsubstituted or monosubstituted or polysubstituted by hydroxyl, $C_1$-$C_4$alkoxy or hydroxy-$C_1$-$C_4$alkoxy, $C_5$-$C_8$cycloalkyl which is unsubstituted or substituted by $C_1$-$C_3$alkyl, aryl which is unsubstituted or monosubstituted or polysubstituted by halogen, nitro, $C_1$-$C_4$alkyl, $C_1$-$C_4$alkoxy or $-NHCOR^8$, or $-COR^8$,
$R^5$ and $R^6$ are each independently of the other hydrogen, $C_1$-$C_6$alkyl or phenyl which is unsubstituted or monosubstituted or polysubstituted by $C_1$-$C_4$alkyl, $C_1$-$C_4$alkoxy or halogen,
$R^7$ is unsubstituted or hydroxy-, $C_1$-$C_4$alkoxy-, hydroxyalkoxy- or phenoxy- substituted $C_1$-$C_6$alkyl or $C_5$-$C_8$cycloalkyl,
$R^8$ is $C_1$-$C_6$alkyl or phenyl which is unsubstituted or substituted by halogen, nitro, $C_1$-$C_4$alkyl or $C_1$-$C_4$alkoxy,
X is an organic bridge member
and the benzo radical (a) being unsubstituted or substituted by halogen, hydroxyl, nitro, $C_1$-$C_4$alkoxy, phenoxy, unsubstituted or halogen- or $C_1$-$C_4$alkyl-substituted phenoxy, amino, n-mono-$C_1$-$C_4$alkylamino, N,N-di-$C_1$-$C_4$alkylamino or phenylamino, $C_1$-$C_4$alkylphenylamino, $C_1$-$C_4$alkoxyphenylamino or halophenylamino.

2. A vat dye according to claim 1, wherein X is an alkylene, alkenylene, alkylidene, cycloalkylene or cycloalkylidene radical or a radical of the formula $-CH_2-X'-CH_2-$ and X' is a bivalent radical of an unsubstituted or substituted aromatic hydrocarbon or heteroaromatic compound.

3. A vat dye according to either of claims 1 or 2, wherein X is a radical of the formula $-CH_2-X'-CH_2$ and X' is a bivalent radical of an unsubstituted or substituted $C_6$-$C_{18}$aromatic compound or $C_4$-$C_{14}$heteroaromatic compound.

4. A vat dye according to claim 3, wherein X' is an unsubstituted or substituted bivalent benzene, naphthalene, anthracene, biphenyl, terphenyl, pyrrole, furan, thiophene, oxazole, imidazole, pyridine, quinoline, benzimidazole, carbazole or xanthene radical.

5. A vat dye according to claim 3, wherein X' is an unsubstituted or substituted bivalent radical of a $C_6$-$C_{18}$aromatic compound.

6. A vat dye according to claim 3, wherein X' is an unsubstituted or substituted phenylene, biphenylene or naphthylene radical.

7. A vat dye according to any one of claims 2 to 6, wherein X' is unsubstituted or monosubstituted or polysubstituted by $C_1$-$C_4$alkyl, $C_1$-$C_4$alkoxy or halogen.

8. A vat dye according to any one of claims 2 to 7, wherein X' is an unsubstituted 1,4-phenylene or 4,4'-biphenylene radical.

9. A vat dye according to any one of claims 1 to 8, wherein the bridge member X is bonded in the 2-position of the one tetrazole heterocycle and in the 2'-position of the other.

10. A vat dye according to any one of claims 1 to 9, wherein the radicals $R^1$ and $R^2$ are each independently of the other $-NHR^4$ and $R^4$ is hydrogen, $C_1$-$C_4$alkyl, $C_5$-$C_6$cycloalkyl or phenyl which is unsubstituted or monosubstituted or polysubstituted by $C_1$-$C_4$alkyl, $C_1$-$C_4$alkoxy or halogen.

11. A vat dye according to any one of claims 1 to 10, wherein $R^3$ is hydrogen, $-CN$ or $-CONR^5R^6$ and $R^5$ and $R^6$ are as defined in claim 1.

12. A vat dye according to any one of claims 1 to 11, wherein $R^3$ is hydrogen or $-CN$.

13. A vat dye according to any one of claims 1 to 12, wherein the benzo radical (a) is unsubstituted.

14. A vat dye according to any one of claims 1 to 13, wherein [A] and [A'] are identical.

15. A vat dye according to claim 1, wherein $R^1$ and $R^2$ are each independently of the other $-NHR^4$ or $-OR^5$ and $R^4$ and $R^5$ are as defined in claim 1, $R^3$ is hydrogen or -CN, X is a radical of the formula $-CH_2-X'-CH_2-$ and X' is a bivalent radical of an unsubstituted or substituted $C_6$-$C_{18}$aromatic compound or $C_4$-$C_{14}$ heteroaromatic compound and the benzo radical (a) is unsubstituted.

16. A vat dye according to claim 1, wherein [A] and [A'] are identical, $R^1$ and $R^2$ are each independently of the other the $-NHR^4$ group, $R^3$ is hydrogen or $-CN$, $R^4$ is hydrogen, $C_1$-$C_4$alkyl, $C_5$-$C_6$cycloalkyl, or phenyl which is unsubstituted or monosubstituted or polysubstituted by $C_1$-$C_4$alkyl, $C_1$-$C_4$alkoxy or halogen, X is a bridge member of the formula $-CH_2-X'-CH_2-$, X' is a bivalent radical of a $C_6$-$C_{18}$aromatic compound and the benzo radical (a) is unsubstituted.

17. A vat dye according to claim 16, wherein X' is a 1,4-phenylene or 4,4'-diphenylene radical.

18. A process for the preparation of a vat dye of the formula I, which process comprises reacting tetrazole compounds of the formulae

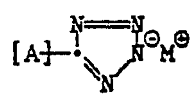

(III)

and

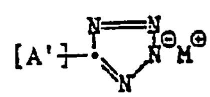

(IV)

in which [A] and [A'] are as defined in claim 1 and may be identical or different and $M^{\oplus}$ is $Li^{\oplus}$, $Na^{\oplus}$, $K^{\oplus}$ or $NH_4^{\oplus}$, with a dihalogen compund of the formula

$$Hal^1\text{-}X\text{-}Hal^2 \qquad (V)$$

where X is as defined in claim 1 and $Hal^1$ and $Hal^2$ are each independently of the other halogen such as chlorine, bromine or iodine.

19. A process according to claim 18, which process comprises reacting 2 mole equivalents of the compound of the formula

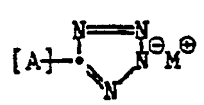

(III)

with 1 mole equivalent of the dihalogen compound of the formula

$$Hal^1\text{-}X\text{-}Hal^2 \qquad (V)$$

where [A], X, $M^{\oplus}$, $Hal^1$ and $Hal^2$ are as defined in claim 18.

20. A process for the preparation of a vat dye of formula I according to claim 1 in which [A] and [A'] are identical, which process comprises, in a single vessel process, first reacting an anthraquinone derivative of the formula

$$[A]\text{—}CN, \qquad (VI)$$

with an azide in a polar aprotic solvent, in the absence or presence of an ammonium salt, to give the tetrazole compound of the formula

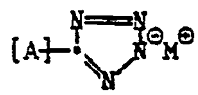

(III)

and subsequently, without intermediary isolation, reacting this tetrazole compound with a compound of the formula

$$Hal^1\text{-}X\text{-}Hal^2 \qquad (V)$$

where $Hal^1$ and $Hal^2$ are each independently of the other halogen such as chlorine, bromine or iodine and [A], $M^{\oplus}$ and X are each as defined in claim 18.

21. Use of a vat dye of formula I according to claim 1 for dyeing or printing textile materials, in particular those made of cellulose material.

## Revendications

1. Colorants de cuve de formule

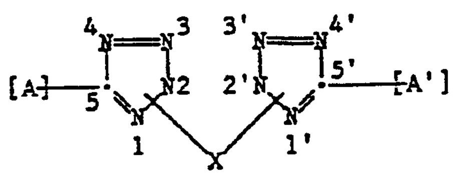

(I),

dans laquelle [A] et [A'], indépendamment l'un de l'autre, représentent un reste anthraquinone de formule

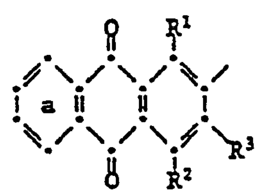

(II)

dans laquelle

$R^1$ et $R^2$, indépendamment l'un de l'autre, sont $-NHR^4$ ou $-OR^5$,

$R^3$ est hydrogène, $-CN$, halogène, $-CONR^5R^6$, $-SO_2\,NR^5\,R^6$ ou $-COOR^7$,

$R^4$ est hydrogène, alkyle en $C_{1-8}$ éventuellement substitué une ou plusieurs fois par hydroxy, alcoxy en $C_{1-4}$

ou hydroxyalcoxy en $C_{1-4}$ cycloalkyle en $C_{5-8}$ éventuellement substitué par alkyle en $C_{1-3}$ aryle éventuellement substitué une ou plusieurs fois par halogène, nitro, alkyle en $C_{1-4}$ alcoxy en $C_{1-4}$ ou $-NHCOR_8$, ou $-COR^8$,

$R^5$ et $R^6$, indépendamment l'un de l'autre, représentent hydrogène, alkyle en $C_{1-6}$ ou phényle éventuellement substitué une ou plusieurs fois par alkyle en $C_{1-4}$, alcoxy en $C_{1-4}$ ou halogène,

$R^7$ représente alkyle en $C_{1-6}$ ou cycloalkyle en $C_{5-8}$ éventuellement substitués par hydroxy, alcoxy en $C_{1-4}$ ou hydroxyalcoxy ou phénoxy,

$R^8$ représente alkyle en $C_{1-6}$ ou phényle éventuellement substitué par halogène, nitro, alkyle en $C_{1-4}$ ou alcoxy en $C_{1-4}$,

X représente un pont organique

et dans laquelle le reste benzo (a) est éventuellement substitué par halogène, hydroxy, nitro, alcoxy en $C_{1-4}$, phénoxy, phénoxy éventuellement substitué par halogène ou alkyle en $C_{1-4}$, amino, N-monoalkyl($C_{1-4}$)amino, N,N-dialkyl($C_{1-4}$)amino ou phénylamino, alkyl($C_{1-4}$)phénylamino, alcoxy($C_{1-4}$)phénylamino ou halogénophénylamino.

2. Colorants de cuve selon la revendication 1, caractérisés en ce que X représente un reste alkylène, alcénylène, alkylidène, cycloalkylène ou cycloalkylidène, ou un reste de formule $-CH_2-X'-CH_2-$ et X' est un reste divalent d'un hydrocarbure aromatique ou hétéroaromatique éventuellement substitué.

3. Colorants de cuve selon l'une des revendications 1, caractérisés en ce que X représente un reste de formule $-CH_2-X'-CH_2-$ et X' est un reste divalent d'un hydrocarbure aromatique en $C_{6-18}$ ou hétéroaromatique en $C_{4-14}$ éventuellement substitué.

4. Colorants de cuve selon la revendication 1, caractérisés en ce que X' représente un reste divalent éventuellement substitué de benzène, naphtalène, anthracène, biphényle, terphényle, pyrrole, furane, thiophène, oxazole, imidazole, pyridine, quinoléine, benzimidazole, carbazole ou xanthène.

5. Colorants de cuve selon la revendication 3, caractérisés en ce que X' représente un reste divalent éventuellement substitué d'un hydrocarbure aromatique en $C_{6-18}$.

6. Colorants de cuve selon la revendication 3, caractérisés en ce que X' représente un reste phénylène, biphénylène ou naphtylène éventuellement substitué.

7. Colorants de cuve selon l'une des revendications 2 à 6, caractérisés en ce que X' est non-substitué ou substitué une ou plusieurs fois par alkyle en $C_{1-4}$, alcoxy en $C_{1-4}$ ou halogène.

8. Colorants de cuve selon l'une des revendications 2 à 7, caractérisés en ce que X' est un reste 1,4-phénylène ou 4,4'-biphénylène non-substitué.

9. Colorants de cuve selon l'une des revendications 1 à 8, caractérisés en ce que le pont X est lié à l'un des hétérocycles tétrazole en position 2, et en position 2' à l'autre hétérocycle tétrazole.

10. Colorants de cuve selon l'une des revendications 1 à 9, caractérisés en ce que les restes $R^1$ et $R^2$, indépendamment l'un de l'autre, représentent $-NHR^4$, et $R^4$ est hydrogène, alkyle en $C_{1-4}$, cycloalkyle en $C_{5-6}$ ou phényle éventuellement substitué une ou plusieurs fois par alkyle en $C_{1-4}$, alcoxy en $C_{1-4}$, ou halogène.

11. Colorants de cuve selon l'une des revendications 1 à 10, caractérisés en ce que $R^3$ est hydrogène, $-CN$ ou $-CONR^5R^6$, et $R^5$ et $R^6$ ont les définitions données dans la revendication 1.

12. Colorants de cuve selon l'une des revendications 1 à 11, caractérisés en ce que $R^3$ est hydrogène ou -CN.

13. Colorants de cuve selon l'une des revendications 1 à 12, caractérisés en ce que le reste benzo (a) est non-substitué.

14. Colorants de cuve selon l'une des revendications 1 à 13, caractérisés en ce que [A] et [A'] sont identiques.

15. Colorants de cuve selon la revendication 1, caractérisés en ce que $R^1$ et $R^2$, indépendamment l'un de l'autre, sont $-NHR^4$ ou $-OR^5$ et $R^4$ et $R^5$ ont les définitions données dans la revendication 1, $R^3$ est hydrogène ou -CN, X est un reste de formule $-CH_2-X'-CH_2-$ et X' représente un reste divalent d'un hydrocarbure aromatique en $C_{6-18}$ ou hétéroaromatique en $C_{4-14}$ éventuellement substitué, et le reste benzo (a) n'est pas substitué.

16. Colorants de cuve selon la revendication 1, caractérisés en ce que [A] et [A'] sont identiques, $R^1$ et $R^2$, indépendamment l'un de l'autre, représentent le groupe $-NHR^4$, $R^3$ est hydrogène ou $-CN$, $R^4$ est hydrogène, alkyle en $C_{1-4}$, cycloalkyle en $C_{5-6}$ ou phényle éventuellement substitué une ou plusieurs fois par alkyle en $C_{1-4}$, alcoxy en $C_{1-4}$ ou halogène, X représente un pont de formule $-CH_2-X'-CH_2-$, X' représente un reste divalent d'un hydrocarbure aromatique en $C_{6-18}$, et le reste benzo (a) n'est pas substitué.

17. Colorants de cuve selon la revendication 16, caractérisés en ce que X' est un reste 1,4-phénylène ou 4,4'-biphénylène.

18. Procédé de préparation de colorants de cuve de formule I, caractérisé en ce que l'on fait réagir des

tétrazoles de formules

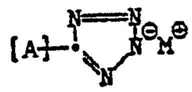 (III)

et

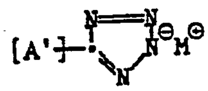 (IV),

dans lesquelles [A] et [A'] ont les définitions données dans la revendication 1 et peuvent être identiques ou différents, et $M^{\oplus}$ est $Li^{\oplus}$, $Na^{\oplus}$, $K^{\oplus}$ ou $NH_4^{\oplus}$, avec un composé dihalogéné de formule

$$Hal^1\text{-}X\text{-}Hal^2 \qquad (V),$$

dans laquelle X a la définition donnée dans la revendication 1, et $Hal^1$ et $Hal^2$, indépendamment l'un de l'autre, représentent un atome d'halogène tel que chlore, brome ou iode.

19. Procédé de préparation selon la revendication 18, caractérisé en ce que l'on fait réagir 2 équivalents molaires du composé de formule

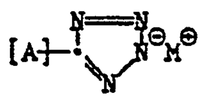 (III)

avec 1 équivalent molaire d'un composé dihalogéné de formule

$$Hal^1\text{-}X\text{-}Hal^2 \qquad (V),$$

dans laquelle [A], X, $M^{\oplus}$, $Hal^1$ et $Hal^2$ ont les définitions indiquées dans la revendication 18.

20. Procédé de préparation de colorants de cuve de formule I selon la revendication 1, dans lesquels [A] et [A'] sont identiques, caractérisé en ce que l'on fait réagir, en un procédé se déroulant dans un seul récipient, d'abord un dérivé anthraquinonique de formule

$$[A]\text{-}CN \qquad (VI),$$

avec un azide dans un solvant aprotique polaire, éventuellement en présence d'un sel d'ammonium, pour obtenir un composé tétrazolique de formule

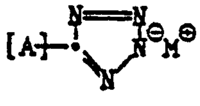 (III)

et que l'on fait ensuite réagir ce composé tétrazolique, sans isolement intermédiaire, avec un composé de formule

$$Hal^1\text{-}X\text{-}Hal^2 \qquad (V),$$

dans laquelle $Hal^1$ et $Hal^2$ représentent, indépendamment l'un de l'autre, un atome d'halogène comme chlore, brome ou iode, et [A], $M^{\oplus}$ et X ont chaque fois les définitions indiquées dans la revendication 18.

21. Emploi de colorants de cuve de formule I selon la revendication 1 pour la teinture et l'impression de matériaux textiles, en particulier de matériaux textiles en matière cellulosique.